# FASCICULE DE BREVET EUROPEEN

(11) **EP 3 510 124 B1**
(45) Date de publication et mention de la délivrance du brevet: **01.11.2023**
(21) Numéro de dépôt: 17768495.8
(22) Date de dépôt: 05.09.2017
(51) Int. Cl.: C10C 3/14, B01J 2/30, C08L 95/00, C08J 3/12

(54) **GRANULES DE BRAI SOLIDES À TEMPERATURE AMBIANTE**
BEI RAUMTEMPERATUR FESTE PECHGRANULATE
PITCH GRANULES WHICH ARE SOLID AT ROOM TEMPERATURE

(30) Priorité: 08.09.2016 FR 1658338
(43) Date de publication de la demande: 17.07.2019
(73) Titulaire: TotalEnergies OneTech, 92400 Courbevoie (FR)
(72) Inventeur: MESNIL, Jean-Pierre, 92800 Puteaux (FR)
(74) Mandataire: Corizzi, Valérie
(86) Numéro de dépôt international: PCT/FR2017/052349
(87) Numéro de publication internationale: WO 2018/046840

(56) Documents cités:
- FR-A- 914 704
- FR-A1- 2 333 850
- GB-A- 2 112 411

## Description

### Domaine technique

La présente invention a pour objet des granules de brai, solides à température ambiante, notamment à température ambiante élevée. La présente invention concerne également un procédé d'enrobage de granules de brai solides à température ambiante, notamment à température ambiante élevée.

La présente invention concerne également un procédé de transport et/ou de stockage et/ou de manipulation de brai se présentant sous une forme de granules de brai solides à température ambiante, notamment à température ambiante élevée.

### Etat de l'art

De manière générale, le brai est stocké et transporté à chaud, en vrac, dans des camions-citernes ou par bateaux à des températures élevées de l'ordre de 140°C à 200°C. Or, le stockage et le transport du brai à chaud présente certains inconvénients. D'une part, le transport du brai à chaud sous forme liquide est considéré comme dangereux et il est très encadré d'un point de vue règlementaire. Ce mode de transport ne présente pas de difficultés particulières lorsque les équipements et les infrastructures de transport sont en bon état. Dans le cas contraire, il peut devenir problématique : si le camion-citerne n'est pas suffisamment calorifugé, la viscosité du brai pourra augmenter durant un trajet trop long. Les distances de livraison du brai sont donc limitées. D'autre part, le maintien du brai à des températures élevées dans les cuves ou dans les camions-citernes consomme de l'énergie. En outre, le maintien du brai à des températures élevées pendant une longue période peut affecter les propriétés du brai.

Pour pallier aux problèmes du transport et du stockage du brai à chaud, des conditionnements permettant le transport et le stockage des brais à température ambiante ont été développés. Ce mode de transport du brai en conditionnement à température ambiante ne représente qu'une fraction minime des quantités transportées dans le monde, mais il correspond à des besoins bien réels pour les régions géographiques d'accès difficile et coûteux par les moyens de transport traditionnels.

A titre d'exemple de conditionnement permettant le transport à froid utilisé actuellement, on peut citer le conditionnement du brai à température ambiante dans des fûts métalliques. Ce moyen est de plus en plus contestable d'un point de vue environnemental car le brai stocké dans les fûts doit être réchauffé avant son utilisation. Or, cette opération est difficile à mettre en oeuvre pour ce type de conditionnement et les fûts constituent un déchet après utilisation. D'autre part, le stockage du brai à température ambiante dans des fûts conduit à des pertes car le brai est extrêmement visqueux et une partie du produit reste sur les parois du fût lors du transvasement dans les cuves. Quant à la manipulation et au transport de brai dans ces fûts, ils peuvent s'avérer difficiles et dangereux si l'équipement spécialisé de manutention des fûts n'est pas disponible chez les transporteurs ou sur le lieu d'utilisation du brai.

Le document FR 2 33 850 divulgue un procédé et un appareil permettant de fabriquer des granules de brai enrobés. L'enrobage des granules est constitué d'une matière carbonée finement divisée.

Le document FR 914 704 divulgue un procédé de préparation de brai sous la forme de granules enrobés. L'enrobage des granules est constitué de substances inorganiques peu ou pas solubles dans le brai.

Il existe un besoin de fournir un brai permettant de remédier aux inconvénients de l'art antérieur.

Plus particulièrement, il existe un besoin de fournir du brai transportable et/ou stockable et/ou manipulable à des températures ambiantes élevées, notamment à une température inférieure à 120°C, de préférence entre 30°C et 100°C.

La Demanderesse a découvert de manière surprenante une nouvelle composition de brai transportable et/ou stockable et/ou manipulable à température ambiante élevée sur des longues périodes, sans pertes de matières, et dont les propriétés du brai sont conservées au cours du temps.

Plus précisément, la Demanderesse a mis en évidence que cette nouvelle composition de granules de brai permet de résister au fluage dans des conditions de transport et/ou de stockage et/ou de manipulation sur des périodes très longues.

### Résumé de l'invention

L'invention a pour objet des granules comprenant :
- un coeur constitué d'une première composition comprenant au moins un brai ladite composition ayant une pénétrabilité à 25°C allant de 0 à 45 1/10 mm, une température de ramollissement bille et anneaux (TBA) allant de 55°C à 175°C, étant entendu que la pénétrabilité est mesurée selon la norme EN 1426 et que la TBA est mesurée selon la norme EN 1427 et
- une couche enrobant au moins une partie de la surface du coeur, ladite couche étant constituée d'une composition de revêtement comprenant au moins un anti-agglomérant choisi parmi les silices pyrogénées et leurs mélanges.

Selon un mode de réalisation préféré, le composé anti-agglomérant est choisi parmi les silices pyrogénées hydrophobes ou hydrophiles et leurs mélanges.

Selon un mode de réalisation de l'invention, la composition de revêtement comprend en outre au moins un composé viscosifiant.

Selon un mode de réalisation préféré, le composé viscosifiant est choisi parmi :
- les composés gélifiants de préférence d'origine végétale ou animale, tels que : la gélatine, l'agar-agar, les alginates, les dérivés de cellulose, les amidons, les amidons modifiés, ou les gommes gellanes ;
- les polyéthylène glycols (PEG) tels que les PEG ayant un poids moléculaire compris entre 800 g.mol-1 et 8000 g.mol-1, comme par exemple un PEG ayant un poids moléculaire de 800 g.mol-1 (PEG-800), un PEG ayant un poids moléculaire de 1000 g.mol-1 (PEG-1000), un PEG ayant un poids moléculaire de 1500 g.mol-1 (PEG-1500), un PEG ayant un poids moléculaire de 4000 g.mol-1 (PEG-4000) ou un PEG ayant un poids moléculaire de 6000 g.mol-1 (PEG-6000) ;
- les mélanges de tels composés.

Selon un mode de réalisation préféré, le composé viscosifiant est choisi parmi la gélatine ou un PEG et le composé anti-agglomérant est choisi parmi les silices pyrogénées, notamment les silices pyrogénées hydrophobes ou hydrophiles; et leurs mélanges.

Selon un mode de réalisation de l'invention, la composition de revêtement représente entre 0,2% et 10% en masse, de préférence entre 0,5% et 8% en masse, plus préférentiellement entre 0,5% et 5% par rapport à la masse totale du coeur des granules de brai.

Selon un mode de réalisation de l'invention, la taille des granules de brai est telle que la dimension moyenne la plus longue est inférieure ou égale à 50 mm, de préférence de 2 à 30 mm.

Un autre objet de l'invention concerne un procédé d'enrobage de granules de brai tel que décrit ci-dessus comprenant :
i) la mise en forme du coeur des granules à partir d'une première composition comprenant au moins un brai,
ii) l'enrobage des granules sur tout ou partie de leur surface par une composition de revêtement comprenant au moins un composé anti-agglomérant.

Un autre objet de l'invention concerne un procédé de transport et/ou stockage et/ou manipulation de brai à température ambiante, ledit brai étant transporté et/ou stocké et/ou manipulé sous forme de granules de brai tel que décrit ci-dessus.

### Description détaillée

Les objectifs que la demanderesse s'est fixés ont été atteints grâce à la mise au point de compositions de brai sous une forme divisée, telle que les granules de brai, permettant de transporter et/ou de stocker et/ou de manipuler le brai, sans pertes de matières et dans des conditions de transport et/ou de stockage et/ou de manipulation satisfaisantes.

Un premier objet de l'invention concerne des granules dont le coeur est formé à partir d'une composition comprenant au moins un brai, ladite composition ayant une pénétrabilité à 25°C allant de 0 à 45 1/10 mm, une température de ramollissement bille et anneaux (TBA) allant de 55°C à 175°C, étant entendu que la pénétrabilité est mesurée selon la norme EN 1426 et que la TBA est mesurée selon la norme EN 1427, lesdits granules étant recouverts sur au moins une partie de leur surface d'une composition de revêtement comprenant au moins un anti-agglomérant choisi parmi les silices pyrogénées et leurs mélanges.

De préférence, l'invention concerne des granules dont le coeur est constitué d'un brai ayant une pénétrabilité à 25°C allant de 0 à 45 1/10 mm, une température de ramollissement bille et anneaux (TBA) allant de 55°C à 175°C, étant entendu que la pénétrabilité est mesurée selon la norme EN 1426 et que la TBA est mesurée selon la norme EN 1427, lesdits granules étant recouverts sur au moins une partie de leur surface d'une composition de revêtement comprenant au moins un anti-agglomérant choisi parmi les silices pyrogénées et leurs mélanges.

Par « température ambiante », on entend la température résultante des conditions climatiques qui est supérieure ou égale à 30°C dans lesquelles est transporté et/ou stocké et/ou manipulé le brai. Plus précisément, la température ambiante équivaut à la température atteinte lors du transport et/ou du stockage et/ou de la manipulation du brai, cette température étant supérieure à 30°C, étant entendu que la température ambiante implique qu'aucun apport de chaleur n'est apporté autre que celui résultant des conditions climatiques.

Par « brai solide à température ambiante », on entend un brai présentant un aspect solide à température ambiante dans des conditions de transport et/ou de stockage et/ou de manipulation. Plus précisément, on entend par brai solide à température ambiante, un brai qui conserve son aspect solide tout au long du transport et/ou du stockage et/ou de la manipulation à température ambiante, c'est-à-dire un brai qui ne flue pas à une température supérieure à 30°C sous son propre poids et de plus, qui ne flue pas lorsqu'il est soumis à une température supérieure à 30°C et à des forces de pressions issues des conditions de transport et/ou de stockage et/ou de manipulation.

Par « pénétrabilité », on entend ici la mesure dite de « pénétrabilité à l'aiguille » qui est réalisée au moyen d'un test normalisé NF EN 1426 à 25°C (P25). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de brai, au bout d'un temps de 5 secondes, d'une aiguille dont le poids avec son support est de 100g. La norme NF EN 1426 remplace la norme homologuée NF T 66-004 de décembre 1986 avec effet au 20 décembre 1999 (décision du Directeur Général d'AFNOR en date du 20 novembre 1999).

Par « point de ramollissement », on entend la mesure dite de « point de ramollissement » qui est réalisée au moyen d'un test normalisé NF EN 1427. Le point de ramollissement bille anneau, ou encore température bille anneau (TBA), correspond à la température à laquelle une bille d'acier de diamètre standard, après avoir traversé la matière à tester (collée dans un anneau), atteint le fond d'un vase standardisé rempli d'un liquide que l'on chauffe progressivement, et dans lequel on a plongé l'appareil.

Par « recouverts sur au moins une partie de leur surface », on entend que les coeurs des granules de brai sont recouverts sur au moins 90% de leur surface, de préférence au moins 95%, plus préférentiellement au moins 99%.

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

L'expression « compris entre X et Y » inclut les bornes. Cette expression signifie donc que l'intervalle visé comprend les valeurs X, Y et toutes les valeurs allant de X à Y.

### Brai

Selon le dictionnaire français, on entend par « brai », un résidu de distillation de pétrole, de houille, de bois ou d'autres molécules organiques.

L'invention porte ici sur les résidus de distillation des goudrons de pétrole, également appelés « brai de pétrole ». Les brais de pétrole au sens de l'invention présentent des caractéristiques différentes des bitumes et par conséquent, ne sont pas inclus dans les bitumes.

Au sens de l'invention, on utilisera indépendamment l'un de l'autre, les termes « brai », « brai de pétrole » et « brai de désasphaltage ».

Les brais peuvent être obtenus par des procédés conventionnels de fabrication en raffinerie. Le procédé de fabrication correspond à la succession d'une distillation atmosphérique et d'une distillation sous vide. Dans un premier temps, le pétrole brut est soumis à une distillation à pression atmosphérique, qui conduit à l'obtention d'une phase gazeuse, de différents distillats et d'un résidu de distillat atmosphérique. Puis, le résidu de la distillation atmosphérique est soumis lui-même à une distillation sous pression réduite, appelée distillation sous vide, qui permet de séparer un gazole lourd, diverses coupes de distillats et un résidu de distillation sous vide. Ce résidu de distillation sous vide contient du « brai de pétrole » en concentration variable.

Il est possible d'obtenir le « brai de pétrole » selon deux procédés :
1er procédé :
   Le résidu de distillation sous vide est soumis à une opération de désasphaltage par addition d'un solvant approprié, tel qu'un alcane comme le propane, qui permet ainsi de précipiter le brai et de le séparer des fractions légères telles que l'huile désasphaltée.
2nd procédé :
   Le résidu de distillation sous vide est soumis à une extraction au solvant, et plus précisément au furfural. Cet aldéhyde hétérocyclique présente la particularité de solubiliser sélectivement les composés aromatiques et polycycliques. Ce procédé permet ainsi d'éliminer les extraits aromatiques et de récupérer le « brai de pétrole ».

Selon un mode de réalisation, le brai est un brai oxydé.

De préférence, le brai oxydé selon l'invention est obtenu par oxydation d'un mélange comprenant du brai et un diluant tel qu'une essence légère, également appelé « fluxant » soumis à une opération d'oxydation dans une tour de soufflage en présence d'un catalyseur, à une température fixée et à une pression donnée.

Par exemple, les brais oxydés peuvent être fabriqués dans une unité de soufflage, en faisant passer un flux d'air et/ou d'oxygène à travers un brai de départ. Cette opération peut être menée en présence d'un catalyseur d'oxydation, par exemple de l'acide phosphorique. Généralement, l'oxydation est réalisée à des températures élevées, de l'ordre de 200 à 300°C, pendant des durées relativement longues typiquement comprises entre 30 minutes et 2 heures, en continu ou par lots. La durée et la température d'oxydation sont ajustées en fonction des propriétés visées pour le brai oxydé et en fonction de la qualité du brai de départ.

Les qualités mécaniques des brais sont généralement appréciées en déterminant une série de caractéristiques mécaniques par des essais normalisés, dont les plus utilisés sont la pénétrabilité à l'aiguille exprimée en 1/10 mm et le point de ramollissement déterminée par l'essai bille et anneau, encore appelée température de ramollissement bille et anneau (TBA).

De préférence, le brai selon l'invention, présente une pénétrabilité à l'aiguille à 25°C de 0 à 45 1/10 mm, de préférence de 0 à 40 1/10 mm, plus préférentiellement de 0 à 30 1/10 mm, encore plus avantageusement de 0 à 20 1/10 mm, étant entendu que la pénétrabilité est mesurée selon la norme EN 1426.

De préférence, le brai selon l'invention présente une température de ramollissement bille et anneaux (TBA) comprise entre 55°C et 175°C, de préférence de 75°C à 175°C, plus préférentiellement de 100°C à 175°C et encore plus avantageusement de 115°C à 175°C. Parmi des exemples de brais utilisés dans l'invention, il y a des brais présentant respectivement une température de ramollissement bille et anneaux (TBA) comprise entre 115°C et 125°C, entre 135°C et 145°C ou encore entre 165°C et 175°C étant entendu que la TBA est mesurée selon la norme EN 1427.

De préférence, le brai selon l'invention présente une pénétrabilité à l'aiguille à 25°C de 0 à 45 1/10 mm, de préférence de 0 à 40 1/10 mm, plus préférentiellement de 0 à 30 1/10 mm, encore plus avantageusement de 0 à 20 1/10 mm, étant entendu que la pénétrabilité est mesurée selon la norme EN 1426 et une température de ramollissement bille et anneaux (TBA) comprise entre 55°C et 175°C étant entendu que la TBA est mesurée selon la norme EN 1427.

De préférence, le brai selon l'invention présente une pénétrabilité à l'aiguille à 25°C de 0 à 45 1/10 mm, étant entendu que la pénétrabilité est mesurée selon la norme EN 1426 et une température de ramollissement bille et anneaux (TBA) comprise entre 55°C et 175°C, de préférence de 75°C à 175°C, plus préférentiellement de 100°C à 175°C et encore plus avantageusement de 115°C à 175°C étant entendu que la TBA est mesurée selon la norme EN 1427.

Les granules de brai selon l'invention peuvent avoir au sein d'une même population de granules, une ou plusieurs formes choisies parmi une forme cylindrique, sphérique ou ovoïde. Plus précisément, les granules de brai selon l'invention ont de préférence une forme cylindrique ou sphérique.

La mise en forme du coeur des granules à partir du brai peut être réalisée selon tout procédé connu, par exemple selon le procédé de fabrication décrit dans le document US 3 026 568, le document WO 2009/153324 ou le document WO 2012/168380. Selon un mode de réalisation particulier, la mise en forme des granules de brai peut être réalisée par égouttage, en particulier à l'aide d'un tambour.

D'autres techniques peuvent être utilisées dans le procédé de fabrication des granules de brai, en particulier le moulage, le pastillage et l'extrusion.

Selon un mode de réalisation de l'invention, la taille des granules de brai est telle que la dimension moyenne la plus longue est de préférence inférieure ou égale à 50 mm, plus préférentiellement de 2 à 30 mm, avantageusement de 5 à 20 mm. Par exemple, l'utilisation d'une filière permet de contrôler la fabrication de granules d'une taille choisie. Un tamisage permet de sélectionner des granules en fonction de leur taille.

Selon l'invention, la composition dont est constitué le coeur des granules comprend au moins un brai. Cette composition peut comprendre en outre un ou plusieurs additifs.

Selon un mode de réalisation préféré, le coeur des granules est constitué d'un brai ou d'un mélange de brais.

### Anti-agglomérant

Par « anti-agglomérant » ou « composé anti-agglomérant », on entend tout composé qui limite, réduit, inhibe, retarde, l'agglomération et/ou l'adhésion des granules entre eux lors de leur transport et/ou de leur stockage et/ou de leur manipulation à température ambiante et qui assure leur fluidité lors de leur manipulation.

Les granules de brai selon l'invention sont recouverts sur au moins une partie de leur surface d'une composition comprenant au moins un anti-agglomérant tel que défini ci-dessous, de préférence sur l'ensemble de leur surface.

Selon l'invention, l'anti-agglomérant est choisi parmi les silices pyrogénées.

Avantageusement, l'anti-agglomérant est choisi parmi les silices pyrogénées hydrophobes ou hydrophiles ; et leurs mélanges.

A titre d'exemple, l'anti-agglomérant peut être les fumées de silice. Les fumées de silice utilisés dans l'invention sont commercialement disponibles et par exemple peuvent être vendus par Evonik Degussa sous la marque AEROSIL^{®}, comme par exemple l'AEROSIL^{®}200, par Cabot Corporation sous les marques CAB-O-SIL^{®} et CAB-O-SPERSE^{®} ou encore par Wacker Chemie AG sous la marque HDK^{®}.

Selon l'invention, le composé anti-agglomérant est choisi parmi les silices pyrogénées.

Au sens de l'invention, les composés « fumée de silice », et « silice pyrogénée » ont la même définition chimique et sont enregistrés sous le même numéro CAS 112 945-52-5. Par conséquent, au sens de l'invention on peut employer ces composés indifféremment l'un de l'autre.

Par « silice pyrogénée », on entend, soit une silice pyrogénée, soit un dérivé de silice pyrogénée.

Par « silice pyrogénée », on entend un composé obtenu par l'hydrolyse en phase vapeur de chlorosilanes tels que le tétrachlorure de silicium, dans une flamme d'oxygène et d'hydrogène. De tels procédés sont généralement désignés comme des procédés pyrogènes dont la réaction globale est : SiCl₄ + H₂ + O₂ → SiO₂ + 4 HCl.

Les silices pyrogénées se distinguent des autres dioxydes de silicium en ce qu'elles présentent une structure amorphe. De haute pureté (> 99,8 % en silice), elles présentent un faible caractère hydrophile (pas de microporosité).

De préférence, le composé de silice pyrogénée est la silice pyrogénée.

Selon un mode de réalisation de l'invention, le composé de silice pyrogénée présente une surface spécifique comprise entre 25 et 420 m²/g, préférentiellement entre 90 et 330 m²/g, plus préférentiellement entre 120 et 280 m²/g.

La surface spécifique de la silice pyrogénée définie en m²/g communément appelée « aire de surface » ou « SA » est mesurée selon la méthode de S. Brunauer, PH Emmet et I. Teller, J. Am. Chemical Society, 60: 309 (1938) (BET).

Selon un mode de réalisation de l'invention, le composé de silice pyrogénée présente une taille moyenne de particules comprise entre 5 et 50 nm.

Selon un mode de réalisation de l'invention, le composé de silice pyrogénée présente un pH compris entre 3 et 10 lorsqu'il est en phase aqueuse.

Selon un mode de réalisation de l'invention, le composé de silice pyrogénée présente une teneur de carbone comprise entre 0,1 et 10% en poids par rapport au poids total du composé de silice pyrogénée.

Selon un mode de réalisation de l'invention, le composé de silice pyrogénée est choisi parmi un composé de silice pyrogénée hydrophile, un composé de silice pyrogénée hydrophobe et leurs mélanges.

De préférence, le composé de silice pyrogénée est un composé de silice pyrogénée hydrophile.

Par « hydrophile », on entend un composé qui est miscible avec l'eau en toutes proportions.

Le composé de silice pyrogénée, ou dérivé de silice pyrogénée, utilisé au sens de l'invention peut être chimiquement modifié.

Différents types de composés de silice pyrogénée sont décrits dans les demandes de brevets suivants et peuvent être utilisés dans la présente invention :
- des silices pyrogénées silanisées, comme décrit dans WO 2004/020532, ou dans WO 2007/128636,
- des silices pyrogénées hydrophiles, comme décrit dans WO 2009/071467, WO 2011/000133 déposés au nom de Degussa AG ou Degussa Gmbh,
- des fumées de silice rendues hydrophobes par un traitement au moyen de polysiloxanes comme décrit dans WO 2008/141932, ou par silanisation comme décrit dans WO 2008/141930,
- des silices dopées par de l'oxyde de potassium comme décrit dans WO 2008/043635, WO 2008/022836,
- des silices sous forme d'agrégats de particules primaires comme décrit dans WO 2009/015969 déposé au nom de Evonik Degussa Gmbh ou dans WO 2010/028261 déposé au nom de Cabot Corporation.

Le composé de silice pyrogénée peut être mis en oeuvre seul ou sous forme d'un mélange au sein d'une composition de revêtement.

Qu'il soit mis en oeuvre seul ou en mélange dans une composition, le composé de silice pyrogénée peut être mis en oeuvre dans le procédé selon l'invention sous la forme d'une poudre ou en dispersion dans un solvant qui s'évapore après application.

De préférence, lorsque la composition comprend au moins un composé de silice pyrogénée et au moins un solvant, la composition comprend de 5 à 70% en poids de composé de silice pyrogénée par rapport au poids total de la composition, plus préférentiellement de 20 à 40% en poids.

De préférence, le solvant est un solvant organique ou de l'eau. Par solvant organique, on entend tout solvant non miscible avec un bitume, tel qu'un alcool, par exemple l'éthanol.

Selon un mode de réalisation de l'invention, le coeur des granules comprend en outre au moins un composé anti-agglomérant tel que défini ci-dessus, de préférence de la silice pyrogénée.

De préférence, le coeur des granules de la première composition comprend en outre entre 0,5% et 20% en masse, de préférence entre 2% et 20% en masse, plus préférentiellement entre 4% et 15% en masse du composé de silice pyrogénée par rapport à la masse totale de la première composition.

Selon un mode de réalisation de l'invention, la masse de l'anti-agglomérant recouvrant au moins une partie de la surface du coeur des granules est comprise entre 0,2% et 10% en masse, de préférence entre 0,5% et 8% en masse, plus préférentiellement entre 0,5% et 5% par rapport à la masse totale du coeur des granules.

De préférence, la couche d'anti-agglomérant recouvrant le coeur des granules de brai selon l'invention est continue de façon à ce qu'au moins 90% de la surface desdits granules est recouverte d'un anti-agglomérant, de préférence au moins 95%, plus préférentiellement au moins 99%.

De préférence également, l'épaisseur moyenne de la couche d'anti-agglomérant est supérieure ou égale à 20 µm, plus préférentiellement comprise entre 20 et100 µm.

Avantageusement, la couche d'anti-agglomérant doit être suffisamment épaisse pour que celle-ci soit continue.

Les granules de brai selon l'invention sont recouverts de l'anti-agglomérant selon tout procédé connu, par exemple selon le procédé décrit dans le document US 3 026 568.

Le brai, formant le coeur de granules recouverts par au moins un composé anti-agglomérant, est facilement manipulable après une durée de transport et/ou de stockage prolongée.

### Composé viscosifiant

Selon un mode de réalisation de l'invention, les granules de brai peuvent être recouverts sur au moins une partie de leur surface par une composition de revêtement comprenant au moins un anti-agglomérant tel que défini ci-dessus et au moins un composé viscosifiant, de préférence sur l'ensemble de leur surface.

Les différents modes de réalisation, variantes, les préférences et les avantages décrits ci-dessus pour les anti-agglomérants s'appliquent également lorsque la composition de revêtement comprend au moins un anti-agglomérant et au moins un composé viscosifiant.

Par « viscosifiant » ou « composé viscosifiant », on entend un composé qui a la propriété de diminuer la fluidité d'un liquide ou d'une composition et donc d'en augmenter la viscosité.

Les termes « viscosifiant » et « composé viscosifiant » sont utilisés au sens de l'invention, de manière équivalente et indépendamment l'un de l'autre.

Le composé viscosifiant au sens de l'invention est un matériau qui présente une viscosité dynamique supérieure ou égale à 50 mPa.s-1, de préférence de 50 mPa.s-1 à 550 mPa.s-1, plus préférentiellement de 80 mPa.s-1 à 450 mPa.s-1, la viscosité étant une viscosité Brookfield mesurée à 65°C. La viscosité d'un viscosifiant selon l'invention est mesurée à 65°C au moyen d'un viscosimètre Brookfield CAP 2000+ et à une vitesse de rotation de 750 tr/min. La lecture de la mesure est réalisée après 30 secondes pour chaque température.

De préférence, le composé viscosifiant est choisi parmi :
- les composés gélifiants de préférence d'origine végétale ou animale, tels que : la gélatine, l'agar-agar, les alginates, les dérivés de cellulose, les amidons, les amidons modifiés, ou les gommes gellanes ;
- les polyéthylène glycols (PEG) tels que les PEG ayant un poids moléculaire compris entre 800 g.mol-1 et 8000 g.mol-1, comme par exemple un PEG ayant un poids moléculaire de 800 g.mol-1 (PEG-800), un PEG ayant un poids moléculaire de 1000 g.mol-1 (PEG-1000), un PEG ayant un poids moléculaire de 1500 g.mol-1 (PEG-1500), un PEG ayant un poids moléculaire de 4000 g.mol-1 (PEG-4000) ou un PEG ayant un poids moléculaire de 6000 g.mol-1 (PEG-6000);
- les mélanges de tels composés.

Avantageusement, le composé viscosifiant est choisi parmi :
- les composés gélifiants de préférence d'origine végétale ou animale, tels que : la gélatine, l'agar-agar, les alginates, les dérivés de cellulose ou les gommes gellanes ;
- les polyéthylène glycols (PEG) tels que les PEG ayant un poids moléculaire compris entre 800 g.mol-1 et 8000 g.mol-1, comme par exemple un PEG ayant un poids moléculaire de 800 g.mol-1 (PEG-800), un PEG ayant un poids moléculaire de 1000 g.mol-1 (PEG-1000), un PEG ayant un poids moléculaire de 1500 g.mol-1 (PEG-1500), un PEG ayant un poids moléculaire de 4000 g.mol-1 (PEG-4000) ou un PEG ayant un poids moléculaire de 6000 g.mol-1 (PEG-6000);
- les mélanges de tels composés.

Selon un mode de réalisation de l'invention préféré, le composé viscosifiant est choisi parmi la gélatine ou un PEG et le composé anti-agglomérant est choisi parmi les silices pyrogénées, notamment les silices pyrogénées hydrophobes ou hydrophiles ; et leurs mélanges.

De manière encore préférée, le composé viscosifiant est choisi parmi la gélatine ou un PEG et le composé anti-agglomérant est choisi parmi les silices pyrogénées, notamment les silices pyrogénées hydrophobes ou hydrophiles et leurs mélanges.

Avantageusement, le composé viscosifiant est choisi parmi la gélatine ou un PEG et le composé anti-agglomérant est choisi parmi les silices pyrogénées, notamment les silices pyrogénées hydrophiles ou hydrophobes, et leurs mélanges.

Selon un mode de réalisation de l'invention, la composition de revêtement comprend au moins 10% en masse d'au moins un composé viscosifiant par rapport à la masse totale de la composition, de préférence de 10 à 90 % en masse, plus préférentiellement de 10 à 85% en masse.

Avantageusement, lorsque le composé viscosifiant est un gélifiant, comme par exemple de la gélatine, la composition de revêtement comprend de 10 à 90 % en masse de composé viscosifiant par rapport à la masse totale de la composition, de préférence de 15 à 85%, encore mieux de 15 à 60%.

Avantageusement, lorsque le composé viscosifiant est un gélifiant, comme par exemple de la gélatine, la composition de revêtement comprend de 10 à 90 % en masse de composé anti-agglomérant par rapport à la masse totale de la composition, de préférence de 15 à 85%, encore mieux de 40 à 85%.

Avantageusement, lorsque le composé viscosifiant est un PEG, comme par exemple un PEG ayant un poids moléculaire compris entre 800 g.mol-1 et 8000 g.mol-1, la composition de revêtement comprend de 10 à 90 % en masse de composé viscosifiant par rapport à la masse totale de la composition, de préférence de 40 à 90%, encore mieux de 60 à 90%.

Avantageusement, lorsque le composé viscosifiant est un PEG, comme par exemple un PEG ayant un poids moléculaire compris entre 800 g.mol-1 et 8000 g.mol-1, la composition de revêtement comprend de 10 à 90 % en masse de composé anti-agglomérant par rapport à la masse totale de la composition, de préférence de 10 à 60%, encore mieux de 10 à 40%.

Préférentiellement, la composition de revêtement comprend au moins 10% en masse d'un composé anti-agglomérant par rapport à la masse totale de la composition, de préférence de 10 à 90% en masse, encore plus préférentiellement de 15 à 90 % en masse.

Selon un mode de réalisation de l'invention, la composition de revêtement comprenant au moins un anti-agglomérant et au moins un composé viscosifiant recouvrant le coeur des granules de brai, selon l'invention est, de préférence, continue de façon à ce qu'au moins 90% de la surface du coeur desdites granules est recouverte d'un anti-agglomérant, de préférence au moins 95%, plus préférentiellement au moins 99%.

De préférence également, l'épaisseur moyenne de la composition de revêtement comprenant au moins un anti-agglomérant et au moins un composé viscosifiant recouvrant le coeur des granules de brai, selon l'invention est, de préférence, supérieure ou égale à 20 µm, plus préférentiellement comprise entre 20 et 100 µm.

Avantageusement, la composition de revêtement comprenant au moins un anti-agglomérant et au moins un composé viscosifiant recouvrant le coeur des granules de brai, selon l'invention, doit être suffisamment épaisse pour que celle-ci soit continue.

Selon un mode de réalisation de l'invention, la composition de revêtement recouvrant au moins une partie de la surface du coeur des granules est comprise entre 0,2% et 10% en masse, de préférence entre 0,5% et 8% en masse, plus préférentiellement entre 0,5% et 5% par rapport à la masse totale du coeur des granules de brai.

De préférence, la composition est solide à température ambiante, y compris à température ambiante élevée.

Selon un mode de réalisation de l'invention, les granules de brai peuvent comprendre en outre une ou plusieurs autres couches d'enrobage, à base d'anti-agglomérant recouvrant tout ou en partie la composition comprenant au moins un anti-agglomérant et au moins un viscosifiant.

### Procédé d'enrobage des granules :

Un autre objet de l'invention concerne un procédé d'enrobage de granules de brai solide à température ambiante recouverts sur au moins une partie de leur surface d'un anti-agglomérant choisi parmi les silices pyrogénées et leurs mélanges, ce procédé comprenant :
i) la mise en forme du coeur des granules à partir d'une première composition comprenant au moins un brai,
ii) l'enrobage du coeur des granules sur tout ou partie de leur surface par une composition de revêtement comprenant au moins un composé anti-agglomérant.

Selon un mode de réalisation, les granules obtenus à l'étape ii) peuvent être séchés à une température allant de 20 à 60 °C, pendant une durée allant de 5 minutes à 5 heures, de préférence de 5 minutes à 2 heures.

Dans ce mode de réalisation, l'étape ii) d'application se fait de préférence par poudrage, farinage, pulvérisation etc.

Selon un autre mode de réalisation, le procédé d'enrobage de granules de brai solide à température ambiante recouverts sur au moins une partie de leur surface d'un anti-agglomérant choisi parmi les silices pyrogénées et leurs mélanges et d'un viscosifiant, comprend :
i) la mise en forme du coeur des granules à partir d'une première composition comprenant au moins un brai,
ii) l'enrobage des granules sur tout ou partie de leur surface par une composition de revêtement comprenant au moins un composé anti-agglomérant et au moins un composé viscosifiant.

Selon un mode de réalisation, les granules obtenus à l'étape ii) peuvent être séchés à une température allant de 20 à 60 °C, pendant une durée allant de 5 minutes à 5 heures, de préférence de 5 minutes à 2 heures.

Dans ce mode de réalisation, l'étape ii) d'application se fait par trempage, pulvérisation, co-extrusion, etc.

Avantageusement, la première composition est constituée d'un brai ou d'un mélange de brais.

### Procédé de transport et/ou de stockage et/ou de manipulation de brai

Un autre objet de l'invention concerne également un procédé de transport et/ou de stockage et/ou de manipulation de brai à température ambiante, ledit brai étant transporté et/ou stocké et/ou manipulé sous forme de granules de brai solides à température ambiante tel que décrit ci-dessus.

De préférence, le brai est transporté et/ou stocké à une température ambiante élevée pendant une durée supérieure ou égale à 2 mois, préférence à 3 mois.

De préférence, la température ambiante élevée est de 20°C à 100°C, de préférence de 20°C à 100°C, plus préférentiellement de 40°C à 100°C, encore plus préférentiellement de 40°C à 100°C.

Les granules de brai selon l'invention présentent l'avantage de conserver leur forme divisée, et donc de pouvoir être manipulés, après un stockage et/ou un transport à une température ambiante élevée. Ils présentent en particulier la capacité de s'écouler sous leur propre poids sans fluer, ce qui permet leur stockage dans un conditionnement en sacs, en fûts ou en containers de toutes formes et de tous volumes puis leur transvasement depuis ce conditionnement vers un équipement, comme un équipement de chantier (cuve, mélangeur etc...).

Les granules de brai sont, de préférence, transportés et/ou stockés en vrac dans des sacs de 1 kg à 100 kg ou de 500 kg à 1000 kg couramment appelés dans le domaine routier des « Big Bag », lesdits sacs étant de préférence en matériau thermofusible. Ils peuvent également être transportés et/ou stockés en vrac dans des cartons de 5 kg à 30 kg ou dans des fûts de 100 kg à 200 kg.

Les différents modes de réalisation, variantes, les préférences et les avantages décrits ci-dessus pour chacun des objets de l'invention s'appliquent à tous les objets de l'invention et peuvent être pris séparément ou en combinaison.

L'invention est illustrée par les exemples suivants donnés à titre non limitatif.

### Partie expérimentale

### Matériel et méthodes

Les propriétés des brais sont mesurées au moyen des méthodes décrites ci-dessous :
- Pénétrabilité à l'aiguille à 25°C (P25) : unité = 1/10mm, norme EN 1426.
- Température de ramollissement bille et anneaux (TBA) : unité = °C, norme EN1427. Matériel :
- brai BR dont les caractéristiques sont présentées ci-dessous dans le tableau 1 :

**Tableau 1**

| | Pénétrabilité P₂₅ | TBA |
|---|---|---|
| BR | 0-4 | 135-145°C |

- Fumées de silice disponible commercialement auprès de la société Evonik sous la marque Aerosil^{®}200

Dans les exemples qui suivent, deux types de granules sont préparés :
- Granules de brai BR (**G₀**)
- Granules de brai BR (**G₁**) dont la surface est recouverte de fumées de silice.

### 1. Préparation des coeurs des granules de brai solides

Les coeurs de granules de brai **G₀** sont préparés à partir du brai BR selon l'un des protocoles suivants.

### 1.1 Méthode générale pour la préparation des coeurs en brai des granules

Le brai BR est réchauffé à 220°C pendant deux heures à l'étuve avant d'être coulé dans un moule en silicone présentant différents trous de forme sphérique de façon à former les coeurs de brai solide. Après avoir constaté la solidification du brai dans le moule, le surplus est arasé avec une lame chauffée au bec bunsen. Après 30 minutes, le brai solide sous forme de granules non enrobés est démoulé et stocké dans un plateau recouvert de papier siliconé.

### 1.2 Méthode générale pour la préparation des coeurs en brai des granules selon l'invention avec un procédé industriel

Pour la mise en oeuvre de cette méthode, on peut utiliser un dispositif et un procédé tels que décrits de façon très détaillée dans le brevet US 4 279 579. Différents modèles de ce dispositif sont disponibles commercialement auprès de la société Sandvik sous le nom commercial de Rotoform.

Des granules de brai G₀ peuvent également être obtenus à partir du brai BR versé dans le réservoir d'un tel dispositif et maintenu à une température comprise entre 180°C et 270°C.

Une buse ou plusieurs buses d'injection permet(tent) le transfert du brai BR à l'intérieur du double tambour de pastillation comportant un tambour externe rotatif, les deux tambours étant équipés de fentes, de buses et d'orifices permettant la pastillation de gouttes de brai au travers du premier tambour fixe et des orifices présentant un diamètre compris entre 2 et 10 mm du tambour externe rotatif. Les gouttes de brai sont déposées sur la face supérieure d'une bande de roulement, horizontale, entraînée par des rouleaux.

### 2. Méthode générale pour la préparation des granules de brai solide selon l'invention comprenant une couche de revêtement

Les granules de brai obtenus selon les méthodes 1.1 et 1.2 sont laissés à température ambiante pendant 10 à 15 minutes. Les granules ainsi formés sont recouverts à leur surface d'un composé anti-agglomérant, puis passés au tamis afin d'enlever l'excédent de composé anti-agglomérant.

Les granules de brai **G₁** selon l'invention sont préparés à partir des granules de brai **G₀** selon la méthode décrite ci-dessus en utilisant comme composé anti-agglomérant de la silice pyrogénée, disponible commercialement sous la référence AEROSIL^{®}200.

Le pourcentage massique de l'enrobage pour les granules de brai **G₁** est d'environ 1% en masse par rapport à la masse totale du bitume des granules.

### 3. Essai de résistance en statique des granules de brai G₀ et G₁

Cet essai a pour but de simuler la résistance à l'écrasement de granules contenus dans un big bag de 800 kg placé sur une palette de 1,21 m². Dans le but de représenter cet essai à l'échelle du laboratoire, on applique une masse de 208 g sur une surface d'un piston de 2 cm de diamètre.

Le montage laboratoire est constitué d'une seringue contenant les granules sur laquelle est installée une boite remplie de granulats pour une masse de 208 g. Le tout est placé dans une étuve réglée à 50°C pendant 24h. S'il n'y a pas de déformation et d'agglomération des granules, la température est augmentée de 5°C pendant une durée de 24h. Après chaque test, on retire le piston et on évalue visuellement la tenue à la compression des granules, notamment leur apparence et leur aptitude à s'agglomérer. Les observations sont répertoriées dans le tableau 2 ci-dessous.

**Tableau 2 Etat des granules après essais en statique**

| | G₀ | G₁ |
|---|---|---|
| Tenue à la charge à 50°C | ++ | +++ |
| Tenue à la charge à 55°C | + | +++ |
| Tenue à la charge à 60°C | -- | +++ |
| Tenue à la charge à 65°C | -- | +++ |
| Tenue à la charge à 70°C | -- | +++ |
| Tenue à la charge à 75°C | -- | +++ |
| Tenue à la charge à 80°C | -- | +++ |
| Tenue à la charge à 85°C | -- | +++ |
| Tenue à la charge à 90°C | -- | +++ |

| | | |
|---|---|---|
| +++ : les granules conservent leur forme initiale et n'adhèrent pas entre eux. ++ : les granules n'adhèrent pas entre eux mais sont légèrement déformés. + : les granules adhèrent légèrement entre eux. - : les granules sont partiellement fondus. -- : les granules sont fondus. | | |

### 4. Essai de résistance en dynamique des granules de brai G₀ et G₁

Cet essai a pour but de simuler les effets d'oscillation et de vibration supportés par les granules lors d'un transport. 100g de granules sont placés dans un flacon de 250ml lequel est placé en position horizontale sur une table d'agitateur secoueur à vitesse maximale pendant 1h15 et à 50°C. Après chaque test, on évalue visuellement la tenue aux oscillations et aux vibrations des granules, notamment leur apparence et leur aptitude à s'agglomérer. Les observations sont répertoriées dans le tableau 3 ci-dessous.

**Tableau 3 Etat des granules après essais en dynamique**

| | G₀ | G₁ |
|---|---|---|
| Tenue aux oscillations/vibrations à 50°C | -- | +++ |

| | | |
|---|---|---|
| +++ : les granules conservent leur forme initiale et n'adhèrent pas entre eux. ++ : les granules n'adhèrent pas entre eux mais sont légèrement déformés. + : les granules adhèrent légèrement entre eux. - : les granules sont partiellement fondus. -- : les granules sont fondus. | | |

Les granules G₁ présentent une très bonne résistance à la charge jusqu'à 90°C et également une très bonne tenue aux oscillations et aux vibrations à 50°C dans la mesure où elles ne se déforment pas et n'agglomèrent pas entre elles comparativement aux granules G₀ qui auront tendance à s'agglomérer lors de leur transport ou de leur stockage, notamment à des températures supérieures ou égales à 60°C. Ainsi, la manipulation desdits granules G₀ sera moins aisée comparativement aux granules G₁. En particulier, si les granules de brai sont transportés dans des sacs ou Big Bag, les granules G₀ agglomérés risquent davantage de fuir hors des sacs ou Big Bag, rendant difficile la manipulation desdits sacs ou Big Bag qui auront tendance à coller entre eux. Leur transvasement dans un équipement de chantier peut également être difficile en raison de leur comportement.

## Revendications

1. Granules de brai comprenant :
- un coeur constitué d'une première composition comprenant au moins un brai, ladite composition ayant une pénétrabilité à 25°C allant de 0 à 45 1/10 mm, une température de ramollissement bille et anneaux (TBA) allant de 55°C à 175°C, étant entendu que la pénétrabilité est mesurée selon la norme EN 1426 et que la TBA est mesurée selon la norme EN 1427, et
- une couche enrobant au moins une partie de la surface du coeur, ladite couche étant constituée d'une composition de revêtement comprenant au moins un anti-agglomérant choisi parmi les silices pyrogénées et leurs mélanges.

2. Granules de brai selon la revendication 1, dans lesquels l'anti-agglomérant est choisi parmi les silices pyrogénées hydrophobes ou hydrophiles et leurs mélanges.

3. Granules de brai selon la revendication 1 ou selon la revendication 2, dans lesquels la composition de revêtement comprend au moins 10% en masse de composé anti-agglomérant, par rapport à la masse totale de la composition.

4. Granules de brai selon l'une quelconque des revendications précédentes, dans lesquels la composition de revêtement comprend de 10 à 90% % en masse de composé anti-agglomérant, par rapport à la masse totale de la composition.

5. Granules de brai selon l'une quelconque des revendications précédentes, dans lesquels la composition de revêtement comprend de 15 à 90% en masse de composé anti-agglomérant, par rapport à la masse totale de la composition.

6. Granules de brai selon l'une quelconque des revendications 1 à 5, dans lesquels la composition de revêtement comprend en outre au moins un composé viscosifiant.

7. Granules de brai selon la revendication 6, dans lesquels le composé viscosifiant est choisi parmi :
- les composés gélifiants de préférence d'origine végétale ou animale, tels que : la gélatine, l'agar-agar, les alginates, les dérivés de cellulose, les amidons, les amidons modifiés, ou les gommes gellanes ;
- les polyéthylène glycols (PEG) tels que les PEG ayant un poids moléculaire compris entre 800 g.mol-1 et 8000 g.mol-1, comme par exemple un PEG ayant un poids moléculaire de 800 g.mol-1 (PEG-800), un PEG ayant un poids moléculaire de 1000 g.mol-1 (PEG-1000), un PEG ayant un poids moléculaire de 1500 g.mol-1 (PEG-1500), un PEG ayant un poids moléculaire de 4000 g.mol-1 (PEG-4000) ou un PEG ayant un poids moléculaire de 6000 g.mol-1 (PEG-6000);
- les mélanges de tels composés.

8. Granules de brai selon l'une des revendications 1 à 7, dans lesquels la composition de revêtement représente entre 0,2% et 10% en masse, de préférence entre 0,5% et 8% en masse, plus préférentiellement entre 0,5% et 5% par rapport à la masse totale du coeur des granules de brai.

9. Granules de brai selon l'une des revendications 1 à 8 dont la taille est telle que la dimension moyenne la plus longue est inférieure ou égale à 50 mm, de préférence de 2 à 30 mm.

10. Granules de brai selon l'une quelconque des revendications 1 à 9, dans lesquels la composition de revêtement est solide à température ambiante.

11. Procédé de fabrication de granules de brai selon l'une quelconque des revendications 1 à 10 comprenant :
i) la mise en forme du coeur des granules à partir d'une première composition comprenant au moins un brai,
ii) l'enrobage du coeur des granules sur tout ou partie de leur surface par une composition de revêtement comprenant au moins un composé anti-agglomérant.

12. Procédé de transport et/ou stockage et/ou manipulation de brai à température ambiante, ledit brai étant transporté et/ou stocké et/ou manipulé sous forme de granules de brai selon les revendications 1 à 10.

## Patentansprüche

1. Pechkörner, umfassend:
- einen Kern, der aus einer ersten Zusammensetzung besteht, die mindestens ein Pech umfasst, wobei die Zusammensetzung eine Penetration bei 25°C von 0 bis 45 1/10 mm, einen Erweichungspunkt Ring und Kugel (RuK) von 55°C bis 175°C aufweist, wobei die Penetration nach der Norm EN 1426 ermittelt wird und der Erweichungspunkt RuK nach der Norm EN 1427 ermittelt wird, und
- eine Schicht, die mindestens einen Teil der Oberfläche des Kerns umhüllt, wobei die Schicht aus einer Beschichtungszusammensetzung besteht, die mindestens ein Trennmittel umfasst, das aus pyrogener Kieselsäure und ihren Mischungen ausgewählt ist.

2. Pechkörner nach Anspruch 1, wobei das Trennmittel aus hydrophober oder hydrophiler pyrogener Kieselsäure und ihren Mischungen ausgewählt ist.

3. Pechkörner nach Anspruch 1 oder nach Anspruch 2, wobei die Beschichtungszusammensetzung bezogen auf die Gesamtmasse der Zusammensetzung mindestens 10 Gewichts-% der Trennmittelverbindung umfasst.

4. Pechkörner nach einem der vorhergehenden Ansprüche, wobei die Beschichtungszusammensetzung bezogen auf die Gesamtmasse der Zusammensetzung 10 Gewichts-% bis 90 Gewichts-% der Trennmittelverbindung umfasst.

5. Pechkörner nach einem der vorhergehenden Ansprüche, wobei die Beschichtungszusammensetzung bezogen auf die Gesamtmasse der Zusammensetzung 15 Gewichts-% bis 90 Gewichts-% der Trennmittelverbindung umfasst.

6. Pechkörner nach einem der Ansprüche 1 bis 5, wobei die Beschichtungszusammensetzung ferner mindestens eine viskositätserhöhende Verbindung umfasst.

7. Pechkörner nach Anspruch 6, wobei die viskositätserhöhende Verbindung aus Folgendem ausgewählt ist:
- gelierenden Verbindungen, vorzugsweise pflanzlichen oder tierischen Ursprungs wie Gelatine, Agar-Agar, Alginaten, Cellulosederivaten, Stärken, modifizierten Stärken oder Gellangummi;
- Polyethylenglykolen (PEG) wie PEG mit einer Molekülmasse zwischen 800 g.mol⁻¹ und 8000 g.mol⁻¹ wie zum Beispiel ein PEG mit einer Molekülmasse von 800 g.mol⁻¹ (PEG-800), ein PEG mit einer Molekülmasse von 1000 g.mol⁻¹ (PEG-1000), ein PEG mit einer Molekülmasse von 1500 g.mol⁻¹ (PEG-1500), ein PEG mit einer Molekülmasse von 4000 g.mol⁻¹ (PEG-4000) oder ein PEG mit einer Molekülmasse von 6000 g.mol⁻¹ (PEG-6000);
- Mischungen aus derartigen Verbindungen.

8. Pechkörner nach einem der Ansprüche 1 bis 7, wobei die Beschichtungszusammensetzung bezogen auf die Gesamtmasse des Kerns der Pechkörner zwischen 0,2 Gewichts-% und 10 Gewichts-%, vorzugsweise zwischen 0,5 Gewichts-% und 8 Gewichts-%, bevorzugter zwischen 0,5 Gewichts-% und 5 Gewichts-% ausmacht.

9. Pechkörner nach einem der Ansprüche 1 bis 8, deren Größe derart ist, dass die längste mittlere Abmessung kleiner gleich 50 mm ist, vorzugsweise 2 bis 30 mm beträgt.

10. Pechkörner nach einem der Ansprüche 1 bis 9, wobei die Beschichtungszusammensetzung bei Umgebungstemperatur fest ist.

11. Verfahren zur Herstellung von Pechkörnern nach einem der Ansprüche 1 bis 10, umfassend:
i) Formen des Kerns der Körner aus einer ersten Zusammensetzung, die mindestens ein Pech umfasst,
ii) Umhüllen des Kerns der Körner über ihre gesamte oder einen Teil ihrer Oberfläche mit einer Beschichtungszusammensetzung, die mindestens eine Trennmittelverbindung umfasst.

12. Verfahren zum Transportieren und/oder Lagern und/oder Handhaben von Pech bei Umgebungstemperatur, wobei das Pech in Form von Pechkörnern nach Anspruch 1 bis 10 transportiert und/oder gelagert und/oder gehandhabt wird.

## Claims

1. Pitch pellets comprising:
- a core constituted of a first composition comprising at least one pitch, said composition having a penetrability at 25°C ranging from 0 to 45 1/10 mm and a ring and ball softening point (RBSP) ranging from 55°C to 175°C, it being understood that the penetrability is measured according to the standard EN 1426 and that the RBSP is measured according to the standard EN 1427, and
- a layer coating at least part of the surface of the core, said layer being constituted of a coating composition comprising at least one anticaking agent chosen from pyrogenic silicas, and mixtures thereof.

2. The pitch pellets as claimed in claim 1, wherein the anticaking agent is chosen from hydrophobic or hydrophilic pyrogenic silicas and mixtures thereof.

3. The pitch pellets as claimed in claim 1 or in claim 2, wherein the coating composition comprises at least 10% by mass of anticaking agent, relative to the total mass of the composition.

4. The pitch pellets as claimed in any one of precedent claims, wherein the coating composition comprises from 10% to 90% by mass of anticaking agent, relative to the total mass of the composition.

5. The pitch pellets as claimed in any one of precedent claims, wherein the coating composition comprises from 15% to 90% by mass of anticaking agent, relative to the total mass of the composition.

6. The pitch pellets as claimed in any one of claims 1 to 5, wherein the coating composition also comprises at least one viscosifying compound.

7. The pitch pellets as claimed in claim 6, wherein the viscosifying compound is chosen from:
- gelling compounds preferably of plant or animal origin, such as: gelatin, agar-agar, alginates, cellulose derivatives, starches, modified starches, or gellan gums;
- polyethylene glycols (PEGs) such as PEGs with a molecular weight of between 800 g.mol⁻¹ and 8000 g.mol⁻¹, for instance a PEG with a molecular weight of 800 g.mol⁻¹ (PEG-800), a PEG with a molecular weight of 1000 g.mol⁻¹ (PEG-1000), a PEG with a molecular weight of 1500 g.mol⁻¹ (PEG-1500), a PEG with a molecular weight of 4000 g.mol⁻¹ (PEG-4000) or a PEG with a molecular weight of 6000 g.mol⁻¹ (PEG-6000);
- mixtures of such compounds.

8. The pitch pellets as claimed in any one of claims 1 to 7, wherein the coating composition represents between 0.2% and 10% by mass, preferably between 0.5% and 8% by mass and more preferentially between 0.5% and 5% by mass relative to the total mass of the core of the pitch pellets.

9. The pitch pellets as claimed in one of claims 1 to 8, the size of which is such that the longest mean dimension is less than or equal to 50 mm, preferably from 2 to 30 mm.

10. The pitch pellets as claimed in in any one of claims 1 to 9, which is solid at ambient temperature.

11. A process for manufacturing pitch pellets as claimed in any one of claims 1 to 10, comprising:
i) the forming of the core of the pellets using a first composition comprising at least one pitch,
ii) the coating of the core of the pellets over all or part of their surface with a coating composition comprising at least one anticaking compound.

12. A process for transporting and/or storing and/or handling pitch at ambient temperature, said pitch being transported and/or stored and/or handled in the form of pitch pellets as claimed in claims 1 to 10.
